# EUROPÄISCHE PATENTSCHRIFT

(11) **EP 2 273 637 B1**
(45) Veröffentlichungstag und Bekanntmachung des Hinweises auf die Patenterteilung: **24.05.2017**
(21) Anmeldenummer: 10006175.3
(22) Anmeldetag: 15.06.2010
(51) Int. Cl.: H02G 3/04, H02G 3/08

(54) **Anordnung zur rauchgasdichten Durchführung eines Langformteils durch eine Wand**
System for exhaust gas sealing of a long part through a wall
Dispositif destiné au passage étanche aux gaz de combustion d'un élément longitudinal à travers un mur

(30) Priorität: 09.07.2009 DE 102009032460; 06.02.2010 DE 102010007046
(43) Veröffentlichungstag der Anmeldung: 12.01.2011
(73) Patentinhaber: Kaiser GmbH & Co. KG, 58579 Schalksmuehle (DE)
(72) Erfinder: Schlegel, Torsten, 58515 Lüdenscheid (DE); Kaiser, Burkard, 58509 Lüdenscheid (DE)
(74) Vertreter: Köchling, Conrad-Joachim

(56) Entgegenhaltungen:
- DE-A1- 19 806 012
- US-A- 4 221 092
- US-A- 4 364 210
- US-A- 4 630 415
- US-A1- 2001 004 023

## Beschreibung

Die Erfindung betrifft eine Anordnung zur rauchgasdichten Durchführung eines Langformteils, zum Beispiel eines Kabels oder eines Rohrs, durch eine Wand, insbesondere eine Brandschutzwand, die eine Durchgangslochung aufweist, durch die ein Langformteil hindurchgeführt werden kann und die im Querschnitt vorzugsweise gering größer als der Querschnitt oder Durchmesser des Langformteils ausgebildet ist, wobei eine Hülse aus intumeszierendem Material vorgesehen ist, deren Außenabmessung oder deren Außendurchmesser der Durchgangslochung angepasst ist und die in die Durchgangslochung einsteckbar oder eingesteckt ist, wobei das Langformteil durch die Hülse hindurchführbar oder hindurchgeführt ist.

Unter dem Begriff "Langformteile" sind Kabel, Rohre oder auch Stäbe zu verstehen.

Bisher ist es üblich, Einzelkabel oder ähnliche Elemente durch eine Brandschutzwand zu montieren, indem zunächst mittels eines Bohrers ein Loch durch die Brandschutzwand gebohrt wird, welches einen ausreichenden Durchmesser hat, um das Kabel oder dergleichen durchzuführen. Nach Durchführen des Kabels wird dann ein Brandschutzkitt in dem Bereich der Kabeldurchführung aufgebracht, wobei der Brandschutzkitt den Spalt zwischen dem durchgeführten Kabel oder dergleichen und der Lochlaibung weitestgehend ausfüllen soll.

Eine derartige Montageweise ist zeitaufwändig und im Ergebnis unbefriedigend, da nicht sichergestellt ist, dass der Brandschutzkitt nicht nur die Mündung der Lochung überdeckt, sondern auch in den Spalt zwischen dem durchgeführten Kabel und der Lochlaibung eingebracht wird.

Aus der US 2001/00 040 23 A1 ist eine Brandschutzmanschette bekannt, die ein rohrförmiges Gehäuse aus Metall aufweist, das an einem Ende einen Anschlussflansch hat. An der Innenseite eines Endabschnittes ist eine intumeszierende Masse angeordnet, die einen Durchführungsbereich für ein Langformteil kreisringförmig umgibt. Die intumeszierende Masse soll im Brandfall, wenn das in die Manschette eingeschobene Langformteil wegbrennt oder wegschmilzt, die Durchgangsöffnung verschließen.

Hierbei ist ein großer Herstellungsaufwand erforderlich, um die mehrteilige Manschette zu fertigen, die aus einem Metallteil und einer intumeszierenden Masse besteht.

Zudem kann hiermit zwar die Durchgangsöffnung verschlossen werden, jedoch verbleibt ein Luftspalt zwischen der Manschette und der Laibung der Lochwandung, in die die Manschette eintaucht, sodass keine ausreichende Sicherheit gegen das Durchtreten von Rauchgasen erreicht wird.

Intumeszierendes Material ist im Stand der Technik bekannt, wozu beispielsweise auf die EP 1 347 549 A1 und die DE 20 2004 018 083 U1 verwiesen wird.

Aus der US 4221092 A ist eine Anordnung gemäß Oberbegriff des Anspruches 1 bekannt. Hierbei ist die Brandschutzwand oder dergleichen in herkömmlicher Art mit einer Durchgangslochung ausgebildet. Auf das durch diese Lochung führende Kabel ist die Hülse aus intumeszierenden Material aufgebracht. Zusammen mit dem Kabel kann die Hülse in die entsprechende Durchgangslochung eingesteckt werden. Hierdurch wird ein sicherer Sitz in der Durchgangslochung gewährleistet, wobei andererseits auch der Spalt zwischen Kabel und Lochlaibung mit dem intumeszierenden Material gefüllt ist, welches durch die Hülse gebildet ist. Die Montage ist einfach durchzuführen. Es ist auch möglich, zunächst die Hülse in die Durchgangsöffnung einzusetzen und anschließend das Langformteil, beispielsweise das Kabel, durch die Hülse zu stecken.

Aus der DE 198 06 012 A1 ist eine ähnliche Anordnung bekannt. Hierbei ist eine Abschottung in Form eines Gehäuses mit Schottwand aus intumeszierendem Werkstoff vorgesehen, welches von einem Langformteil durchgreifbar ist.

Ausgehend von diesem Stand der Technik liegt der Erfindung die Aufgabe zugrunde, eine alternative Anordnung zur rauchgasdichten Durchführung eines Langformteiles bereitzustellen und eine Anpassung an unterschiedlich bemessene Durchführungsrohre und Lochungen zu ermöglichen.

Zur Lösung dieser Aufgabe wird vorgeschlagen, dass die Hülse aus einer spritzgießfähigen Kunststoffmasse mit Intumeszenzadditiven besteht und dass die Hülse einen abtrennbaren Mantelbereich aufweist, so dass die Hülse mit dem abtrennbaren Mantelbereich in eine Durchgangslochung mit einem ersten Durchmesser passend einsteckbar ist und die Hülse ohne den abtrennbaren Mantelbereich in eine Durchgangslochung mit einem zweiten, gegenüber dem ersten Durchmesser geringeren Durchmesser passend einsteckbar ist.

Eine solche Hülse kann beispielsweise mit einem im Durchmesser relativ großen Rohr kombiniert werden und in eine Durchgangslochung mit einem ersten, relativ großen Durchmesser eingesetzt werden.
Sofern ein kleineres Rohr eingesetzt wird, beziehungsweise entsprechend die Durchgangslochung im Durchmesser kleiner ausgebildet wird, wird der abtrennbare Mantelbereich der Hülse entfernt. Die Hülse kann dann aufgrund ihrer eigenen Elastizität zusammengedrückt werden, so dass sie insgesamt eine Hülse mit geringerem Durchmesser bildet und in die kleinere Durchgangslochung passend eingesetzt werden kann.

Vorzugsweise ist dabei vorgesehen, dass der erste Durchmesser der Durchgangslochung 35 mm und der zweite Durchmesser 32 mm beträgt.

Unter Umständen kann vorgesehen sein, dass der abtrennbare Mantelbereich gewendelt über die gesamte Länge der Hülse verläuft.

Bei einer solchen gewendelten Ausbildung des abtrennbaren Mantelbereiches ist sichergestellt, dass dann, wenn der Mantelbereich abgetrennt ist und die Hülse auf den geringeren Durchmesser zusammengedrückt wird, die beiden Hülsenenden, die im Bereich der Trennfuge des abgetrennten Mantelbereiches liegen, axial nicht gegeneinander verschoben sind, sondern lagerichtig ausgerichtet bleiben.

Alternativ kann vorgesehen sein, dass der abtrennbare Mantelbereich geradlinig über die gesamte Länge der Hülse, vorzugsweise parallel zur Mittellängsachse der Hülse verläuft.

Eine solche Ausbildung ist einfacher in der Herstellung und in der Handhabung.

Bevorzugt ist zudem vorgesehen, dass der abtrennbare Mantelbereich über Sollbruchstellen mit dem Mantel der Hülse verbunden ist.

Hierdurch ist es in einfacher Weise möglich, den abtrennbaren Mantelbereich von der Hülse zu trennen.

Unter Umständen ist bevorzugt vorgesehen, dass die Hülse einen über deren gesamte Länge verlaufenden Längsschlitz aufweist und der abtrennbare Mantelbereich neben dem Längsschlitz angeordnet ist.

Durch die Ausbildung des Längsschlitzes ist es möglich, die Hülse mit dem noch daran befindlichen abtrennbaren Mantelbereich geringfügig zusammenzudrücken und in die entsprechende Durchgangslochung einzusetzen, wobei die Hülse dann unter der Materialelastizität geringfügig aufspreizt und sich gegen die Laibung der Durchgangslochung abstützt. Auch dann, wenn der abtrennbare Mantelbereich entfernt ist, wird diese Funktion bei der entsprechenden im Durchmesser kleineren Durchgangslochung erreicht. Dadurch, dass der abtrennbare Mantelbereich einerseits durch den Längsschlitz begrenzt ist und andererseits durch eine vorzugsweise parallel zu dem Längsschlitz verlaufende Solltrennstelle, ist es in einfacher Weise möglich, den abtrennbaren Mantelbereich manuell zu entfernen.

Zudem ist bevorzugt vorgesehen, dass die Hülse an einem Ende einen Flanschrand aufweist, wobei der abtrennbare Mantelbereich bis über den Flanschrand verläuft, so dass mit dem Mantelbereich auch ein Teilbereich des Flanschrandes abtrennbar ist.

Bei einer solchen Ausbildung einer Hülse mit Flanschrand soll natürlich der abtrennbare Mantelbereich auch über den Flanschrand verlaufen, so dass ein Teilbereich des Flanschrandes gemeinsam mit dem abtrennbaren Mantelbereich entfernbar ist.

Um die Handhabung zu vereinfachen ist zudem vorgesehen, dass am abtrennbaren Mantelbereich eine Handhabe ausgebildet ist.

Hierbei ist besonders bevorzugt vorgesehen, dass der abtrennbare Mantelbereich über ein Ende der Hülse vorragt, vorzugsweise über das ohne Flanschrand ausgebildete Ende, und dass der vorragende Endbereich die Handhabe bildet.

Um zu erreichen, dass bei gleichen Abmessungen der Hülse Langformteile, beispielsweise Kabel, unterschiedlicher Durchmesser durch die Hülse geführt werden können und dennoch eine rauchgasdichte Anordnung erreicht wird, wird vorgeschlagen, dass die Hülse über ihre Länge vollständig oder mindestens in einem dem Flanschrand abgewandten Endbereich sich trichterförmig zum Endbereich verjüngend ausgebildet ist, so dass die lichte Weite der Hülse im mit Flanschrand versehenen Bereich größer als im anderen Endbereich ist.

Die Ausbildung kann beispielsweise derart vorgenommen sein, dass die Hülse im Bereich des Flanschrandes einen lichten Durchmesser von nahezu 2 cm aufweist, während sie im dem Flanschrand abgewandten Endbereich eine lichte Weite von 0,5 cm aufweisen kann. Es sind demzufolge Kabel unterschiedlicher Durchmesser durch die Hülse zu führen und durch die Trichterform rauchgasdicht zu positionieren, wobei je nach Durchmesser des durchgeführten Langformteiles sich die Trichterform aufweitet.

Um diese Aufweitung beim Durchführen unterschiedlicher Langformteile zu fördern, ist vorgesehen, dass mindestens der trichterförmige Bereich aus elastisch verformbarem Material besteht.

Aus dem gleichen Grunde ist vorzugsweise vorgesehen, dass der trichterförmige Bereich auf seinen Umfang verteilt, in Längsrichtung der Hülse gerichtete materialverdünnte Zonen aufweist.

Durch diese Ausbildung wird die Durchführung von im Durchmesser relativ dicken Langformteilen erleichtert, da dann die materialverdünnten Zonen in Verbindung mit dem elastisch verformbaren Material das Durchschieben des Langformteiles erleichtern.

Des Weiteren kann zusätzlich oder alternativ vorgesehen sein, dass die Hülse am freien Ende des verjüngten Endbereiches in Längsrichtung gerichtete, zum freien Ende offen ausmündende Schlitze auf den Umfang verteilt aufweist, vorzugsweise im Bereich der materialverdünnten Zonen.

Durch die Ausbildung von entsprechenden randoffenen Schlitzen wird ebenfalls die Möglichkeit erleichtert, einerseits relativ dünne Langformteile aber andererseits auch relativ dicke Langformteile durch die Hülse zu führen, wobei bei dickeren Langformteilen die Hülse sich im Trichterbereich aufweiten kann entsprechend der Anordnung der Schlitze. Diese Schlitze sind vorzugsweise im Bereich der materialverdünnten Zonen ausgebildet. Sofern diese Zonen den Querschnitt von Kerben oder dergleichen haben, sind die Schlitze im Grund der Kerben angeordnet. Vorzugsweise reichen die Schlitze nicht über die gesamte Länge der materialverdünnten Zonen, sondern nur vom Ende der Hülse bis über einen geringen Teilbereich der materialverdünnten Zonen. Hierdurch ist sichergestellt, dass bei der Durchführung von dünnen Langformteilen eine Rauchgasdichtigkeit sichergestellt wird, da dann durch die nur über einen geringen Teil der Hülsenlänge verlaufenden Schlitze keine Leckstellen für Rauchgas gebildet sind. Bei dickeren Langformteilen können die Schlitze sogar aufreißen, um den Raum für das Langformteil freizugeben, ohne dass dadurch die Rauchgasdichtigkeit beeinträchtigt wird.

Eine besonders bevorzugte Weiterbildung wird darin gesehen, dass die Hülse vom Flanschrand ausgehend einen ersten Längsbereich aufweist, der sich zum anderen Ende gering konisch verjüngt, vorzugsweise in einem zur Entformung ausreichenden Winkel 3° bis 5°, wobei dieser Längsbereich vorzugsweise außenseitig vorragende Längsrippen aufweist, und dass die Hülse im an den ersten Längsbereich anschließenden zweiten Längsbereich bis zum Ende hin trichterförmig verjüngt ist, vorzugsweise in einem Winkel von etwa 20° bis 40° gegenüber der Mittellängsachse der Hülse.

Durch diese Ausbildung wird der sichere Sitz in der entsprechenden Lochung oder Ausnehmung der Brandschutzwand sichergestellt, da der in der Durchgangslochung der Brandschutzwand sitzende erste Längsbereich der Hülse nahezu zylindrisch ausgebildet ist, also gut an der Lochlaibung anliegt, insbesondere dann, wenn zusätzlich die entsprechenden außenseitig vorragenden Längsrippenausgebildet sind. In dem darüber hinausgehenden zweiten Längsbereich ist die entsprechende trichterförmige Verjüngung in starkem Maße vorgesehen, um in diesem Bereich Langformteile unterschiedlichen Durchmessers rauchgasdicht zu umfassen.

Des Weiteren kann vorgesehen sein, dass die Wandstärke der Hülse im ersten Längsbereich größer als im zweiten Längsbereich ist.

Hierdurch wird sichergestellt, dass im ersten Längsbereich genügend Masse an intumeszierenden Material vorhanden ist, um im Brandfall die Durchgangslochung zu verschließen. Im zweiten Längsbereich ist die Wandstärke vorzugsweise geringer, um die Anpassung des zweiten Längsbereiches an unterschiedliche Durchmesser von Langformteilen zu erleichtern.

Bevorzugt ist dabei vorgesehen, dass die Hülse länger ist als die Wandstärke der die Durchgangslochung aufweisende Brandschutzwand.

Bevorzugt kann vorgesehen sein, dass die Hülsenlänge maximal 45 mm beträgt.

Diese Ausbildung ist deswegen bevorzugt, weil üblicherweise die Plattenstärke von Brandschutzwänden etwa 40 mm beträgt.

Ein Ausführungsbeispiel der Erfindung ist in der Zeichnung dargestellt und im Folgenden näher beschrieben.

Es zeigt:
- Figur 1: eine erfindungsgemäße Hülse in einer ersten Ansicht;
- Figur 2: desgleichen in einer zweiten Ansicht.

Die Zeichnung zeigt eine Anordnung zur rauchgasdichten Durchführung eines Langformteils, insbesondere eines Kabels, durch eine Brandschutzwand, wobei die Brandschutzwand eine Durchgangslochung aufweist, die dem durchzuführenden Kabel im Durchmesser angepasst ist, wobei das Kabel im Montagesollzustand durch die Durchgangslochung gesteckt ist. Um eine rauchgasdichte Durchführung zu erreichen, ist auf dem Kabel eine Hülse 1 aus intumeszierendem Material angeordnet. Das intumeszierende Material besteht aus einer spritzgießfähigen Kunststoffmasse mit Intumeszensadditiven. Der Innendurchmesser, also die lichte Weite der Hülse 1, ist dem Kabeldurchmesser angepasst, während der Außendurchmesser der Hülse 1 der Durchgangslochung im Durchmesser angepasst ist. Eine solche Hülse 1 umgibt das entsprechende Kabel und ist zusammen mit dem Kabel in die entsprechende Durchgangslochung einsteckbar, wodurch eine rauchgasdichte Anordnung erreicht wird. Vorzugsweise ist die Hülse 1 länger als die Wandstärke der die Durchgangslochung aufweisenden Brandschutzwand.

Die Hülse 1 weist an einem Endbereich einen nach radial außen abragenden, vorzugsweise umlaufenden Flanschrand 2 auf, wobei die Hülse 1 den Flanschrand 2 axial überragen kann, so dass in der Montagesollposition der vorragende Bereich geringfügig über die von der Außenseite der Brandschutzwand aufgespannten Ebene vorragt. Wie aus den zeichnerischen Darstellungen ersichtlich, ist die Hülse 1 so ausgebildet, dass sie sich außenseitig vom Flanschrand 2 zum flanschrandlosen Ende hin konisch verjüngt. Hierdurch wird das Einstecken der Hülse samt Kabel in die entsprechende Lochung in der Brandschutzwand erleichtert.

Ferner kann die Hülse 1 am Innenmantel Vorsprünge aufweisen, an denen sich der Mantel des durchgesteckten Kabels abstützt. Die Vorsprünge sind vorzugsweise als umlaufende Ringe geformt. Dabei sind mehrere Ringe mit axialem Abstand voneinander gleichmäßig auf die Länge des Innenmantels verteilt angeordnet.

Diese Ringe können beispielsweise zusätzlich mit einer angeformten elastischen Dichtlippe versehen sein oder aber die Ringe selbst können aus elastomerem oder sonstigen elastischen Werkstoff bestehen.

Die Hülse 1 kann auch an beiden Enden verjüngt sein, wobei auch die Verjüngungen ringförmige Innenkonturen aufweisen, an denen sich der Mantel eines Langformteils, beispielsweise eines Kabels, abstützen kann. Dabei ist die axial außen liegende ringförmige Innenkontur im Bereich der Verjüngung hat einen größeren Durchmesser. Je nach Durchmesser des Langformteils kann die äußerste Ringform der Verjüngung abgetrennt werden oder auch möglicherweise vorgesehen beide ringförmigen Verjüngungen können abgetrennt werden (an beiden Enden der Hülse 1), wenn dies aufgrund des durchzuführenden Langformteils oder Kabels erforderlich ist.

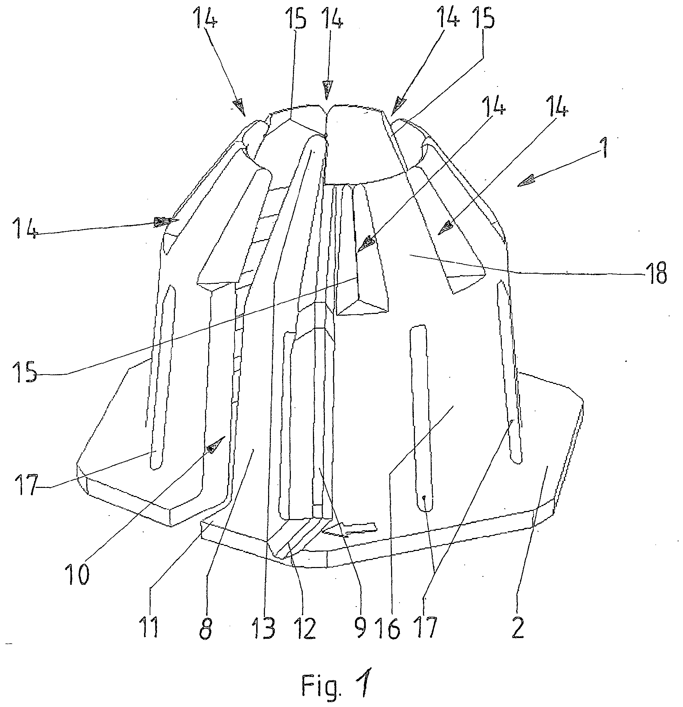

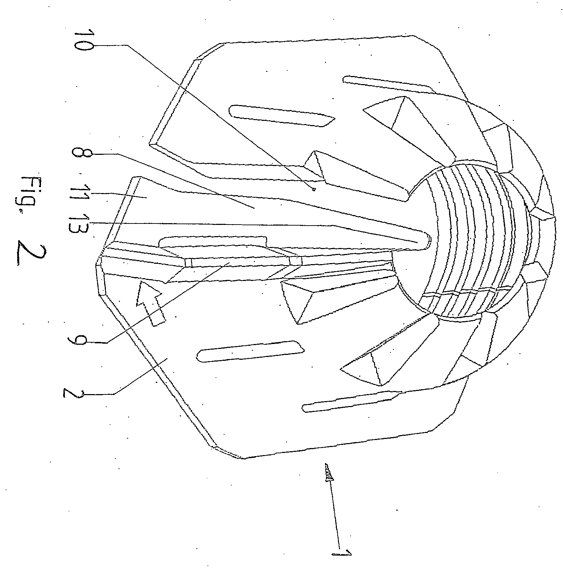

Während im Ausführungsbeispiel nach Figur 1 und 2 die Hülse 1 ein einstückiges Element ist, kann die Hülse 1 auch längsgeteilt sein. Sie bildet hiermit zwei gleiche Hülsenhalbschalen. Die Hülsenhalbschalen sind über eine Materialbrücke miteinander zu einer unverlierbaren Montageeinheit zusammengehalten. Im Montagesollzustand können die Hülsenhalbschalen um die Materialbrücke zueinander verschwenkt werden, sodass eine Hülsenform analog der Ausführungsform gemäß Figur 1 und 2 entsteht.

Die Materialbrücken können vorzugsweise aus elastomerem Werkstoff bestehen, um einen guten Zusammenhalt der Hülsenhalbschalen zu gewährleisten und die Verschwenkung der Halbschalen in die Sollposition in einfacher Weise zu ermöglichen, ohne dass Materialbrücken zerstört werden.

Vorzugsweise beträgt die Hülsenlänge maximal 45 mm. Zusätzliche können gegebenenfalls die durch Längsteilung gebildeten Hülsenteile oder Halbschalen an ihren Längsrandkanten Steckverbindungsteile oder Schubverbindungsteile aufweisen, die einstückig mit den Halbschalen ausgebildet sind und die beim Zusammenfügen der Halbschalen ineinandergreifen und sicherer Zusammenhalt auch vor dem Einschieben der Hülse 1 in die Durchgangslochung der Brandschutzwand gewährleistet ist.

Die in der Zeichnung gemäß Figur 1 und 2 dargestellte Hülse 1 ist für die rauchgasdichte Durchführung eines Installationsrohres durch eine Brandschutzwand bestimmt. Zur Installation ist die Hülse 1 auf das Rohr aufgebracht, also von dem Rohr durchgriffen und wird gemeinsam mit dem Rohr in die entsprechende Durchgangslochung der Brandschutzwand oder dergleichen eingebracht. Der Innendurchmesser, also die lichte Weite der Hülse 1, ist dem Rohrdurchmesser angepasst. Der Außendurchmesser der Hülse 1 ist der Abmessung der Durchgangslochung angepasst. Wie gezeigt, weist die Hülse 1 einen abtrennbaren Mantelbereich 8 auf. Die Hülse 1 kann einerseits mit dem noch nicht abgetrennten Mantelbereich 8 in eine Durchgangslochung mit einem ersten relativ großen Durchmesser passend eingesteckt werden, wobei die Hülse 1 dann von einem Rohr entsprechenden größeren Durchmessers durchgriffen ist. in einer zweiten Montagesituation kann andererseits der abtrennbare Mantelbereich 8 entfernt sein und die Hülse 1 ist dann in eine im Durchmesser kleinere Durchgangslochung einsteckbar und mit einem im Durchmesser kleineren Installationsrohr zu kombinieren.

Vorzugsweise ist der größere Durchmesser der Durchgangslochung 35 mm und der kleinere Durchmesser der Durchgangslochung 32 mm.

Im Ausführungsbeispiel verläuft der abtrennbare Mantelbereich 8 gradlinig über die gesamte Länge der Hülse 1 parallel zur Mittellängsachse der Hülse 1. Dabei ist der abtrennbare Mantelbereich 8 über Sollbruchstellen 9 mit dem übrigen Mantel der Hülse 1 verbunden. Zusätzlich weist im Ausführungsbeispiel die Hülse 1 einen über deren gesamte Länge verlaufenden Längsschlitz 10 auf, wobei der abtrennbare Mantelbereich 8 dem Längsschlitz 10 unmittelbar benachbart ist, sodass die eine Seitenlängskante des abtrennbaren Mantelbereichs 8 durch den Längsschlitz 10 gebildet ist, während die andere dazu parallele Seitenlängskante durch die Solltrennstelle 9 gebildet ist. Zusätzlich weist im Ausführungsbeispiel die Hülse 1 am einen Ende einen Flanschrand 2 auf, wobei der abtrennbare Mantelbereich 8 auch über den Flanschrand 2 verläuft, sodass mit dem Mantelbereich 8 auch ein Teilbereich 11 des Flanschrandes abtrennbar ist, der ebenfalls über eine Solltrennstelle 12 mit dem Rest des Flanschrandes 2 verbunden ist. Zusätzlich ist am abtrennbaren Mantelbereich 8 eine Handhabe 13 ausgebildet. Hierbei ist der abtrennbare Mantelbereich 8 über das dem Flanschrand 2 abgewandte Ende der Hülse 1 verlängert.

Dieser vorragende Endbereich bildet sie Handhabe 13. Der Benutzer kann also an diesem Bereich manuell angreifen, um den abtrennbaren Mantelbereich 8 samt Flanschrand Teilbereich 11 zu entfernen.

Vorzugsweise ist die Hülse 1 über ihre Länge vollständig oder, wie im Ausführungsbeispiel gezeigt, mindestens in einem dem Flanschrand 2 abgewandten Endbereich trichterförmig zum freien Ende verjüngt, sodass die lichte Weite der Hülse 1 in dem mit Flanschrand 2 versehenen Endbereich größer als im anderen Endbereich ist. Vorzugsweise besteht mindestens der trichterförmige verjüngte. Bereich aus elastisch verformbarem Material. Zudem weist der trichterförmige Bereich auf seinem Umfang verteilt in Längsrichtung der Hülse 1 gerichtete materialverdünnte Zonen 14 auf. Des Weiteren weist die Hülse 1 am freien Ende des verjüngten Endbereichs in Längsrichtung gerichtete, zum freien Ende, also in Figur 1 nach oben, offen ausmündende Schlitze 15 ebenfalls auf den Umfang verteilt auf. Im Ausführungsbeispiel sind diese Schlitze im Bereich der materialverdünnten Zonen 14 ausgebildet, allerdings nur im Endbereich dieser Zonen 14, die also zum oberen Ende auslaufen. Beispielsweise können diese Schlitze nur über ein Viertel oder Drittel der Länge der materialverdünnten Zonen 14 ausgebildet sein.

Gemäß Ausführungsbeispiel Figur 1 und 2 weist die Hülse 1 vom Flanschrand 2 ausgehend einen ersten Längsbereich 16 auf, der sich zum anderen Ende hin gering konisch verjüngt, beispielsweise in einem zur Entformung ausreichenden Winkel von 3° bis 5° gegenüber der Längsmittelachse der Hülse 1. In diesem ersten Längsbereich 16 sind zudem außenseitig vorragende Längsrippen 17 ausgebildet, um einen sicheren Sitz in der entsprechenden Durchgangslochung einer Brandschutzwand zu erreichen. Im an den ersten Längsbereich 16 anschließenden zweiten Längsbereich 18 ist die Hülse 1 zum freien Ende hin trichterförmig verjüngt, wobei hier ein Winkel von etwa 20° bis 40° gegenüber der Mittellängsachse der Hülse 1 vorgesehen sein kann. Des Weiteren ist bevorzugt die Wandstärke der Hülse 1 im ersten Längsbereich 16 größer als im zweiten Längsbereich 18. Alle diese Maßnahmen dienen dazu, Langformteile unterschiedlicher Durchmesser mit ein und derselben

Hülse 1 rauchdicht umfassen zu können und durch eine entsprechende Hülse 1 durchschieben zu können, wobei zudem die sichere Anordnung der Hülse 1 in der Durchgangslochung erreicht werden soll.

## Patentansprüche

1. Anordnung zur rauchgasdichten Durchführung eines Langformteils, zum Beispiel eines Kabels oder eines Rohrs, durch eine Wand, insbesondere eine Brandschutzwand, die eine Durchgangslochung aufweist, durch die ein Langformteil hindurchgeführt werden kann und die im Querschnitt vorzugsweise gering größer als der Querschnitt oder Durchmesser des Langformteils ausgebildet ist, wobei eine Hülse (1) aus intumeszierendem Material vorgesehen ist, deren Außenabmessung oder deren Außendurchmesser der Durchgangslochung angepasst ist und die in die Durchgangslochung einsteckbar oder eingesteckt ist, wobei das Langformteil durch die Hülse hindurchführbar oder hindurchgeführt ist,
**dadurch gekennzeichnet, dass** die Hülse (1) aus einer spritzgießfähigen Kunststoffmasse mit Intumeszenzadditiven besteht und dass die Hülse (1) einen abtrennbaren Mantelbereich (8) aufweist, so dass die Hülse (1) mit dem abtrennbaren Mantelbereich (8) in eine Durchgangslochung mit einem ersten Durchmesser passend einsteckbar ist und die Hülse (1) ohne den abtrennbaren Mantelbereich (8) in eine Durchgangslochung mit einem zweiten, gegenüber dem ersten Durchmesser geringeren Durchmesser passend einsteckbar ist.

2. Anordnung nach Anspruch 1,
**dadurch gekennzeichnet, dass** der erste Durchmesser der Durchgangslochung 35 mm und der zweite Durchmesser 32 mm beträgt.

3. Anordnung nach einem der Ansprüche 1 oder 2,
**dadurch gekennzeichnet, dass** der abtrennbare Mantelbereich (8) gewendelt über die gesamte Länge der Hülse (1) verläuft.

4. Anordnung nach Anspruch 1 oder 2,
**dadurch gekennzeichnet, dass** der abtrennbare Mantelbereich (8) geradlinig über die gesamte Länge der Hülse (1), vorzugsweise parallel zur Mittellängsachse der Hülse (1) verläuft.

5. Anordnung nach einem der Ansprüche 1 bis 4,
**dadurch gekennzeichnet, dass** der abtrennbare Mantelbereich (8) über Sollbruchstellen (9) mit dem Mantel der Hülse (1) verbunden ist.

6. Anordnung nach einem der Ansprüche 1 bis 5,
**dadurch gekennzeichnet, dass** die Hülse (1) einen über deren gesamte Länge verlaufenden Längsschlitz (10) aufweist und der abtrennbare Mantelbereich (8) neben dem Längsschlitz (10) angeordnet ist.

7. Anordnung nach einem der Ansprüche 1 bis 6,
**dadurch gekennzeichnet, dass** die Hülse (1) an einem Ende einen Flanschrand (2) aufweist, wobei
der abtrennbare Mantelbereich (8) bis über den Flanschrand (2) verläuft, so dass mit dem Mantelbereich (8) auch ein Teilbereich (11) des Flanschrandes (2) abtrennbar ist.

8. Anordnung nach einem der Ansprüche 1 bis 7,
**dadurch gekennzeichnet, dass** am abtrennbaren Mantelbereich (8) eine Handhabe (13) ausgebildet ist.

9. Anordnung nach einem der Ansprüche 1 bis 8,
**dadurch gekennzeichnet, dass** der abtrennbare Mantelbereich (8) über ein Ende der Hülse (1) vorragt, vorzugsweise über das ohne Flanschrand (2) ausgebildete Ende, und dass der vorragende Endbereich die Handhabe (13) bildet.

10. Anordnung nach einem der Ansprüche 1 bis 9,
**dadurch gekennzeichnet, dass** die Hülse (1) über ihre Länge vollständig oder mindestens in einem dem Flanschrand (2) abgewandten Endbereich sich trichterförmig zum Endbereich verjüngend ausgebildet ist, so dass die lichte Weite der Hülse (1) im mit Flanschrand (2) versehenen Bereich größer als im anderen Endbereich ist.

11. Anordnung nach Anspruch 10,
**dadurch gekennzeichnet, dass** mindestens der trichterförmige Bereich aus elastisch verformbarem Material besteht.

12. Anordnung nach einem der Ansprüche 10 oder 11, **dadurch gekennzeichnet, dass** der trichterförmige Bereich auf seinen Umfang verteilt, in Längsrichtung der Hülse (1) gerichtete materialverdünnte Zonen (14) aufweist.

13. Anordnung nach einem der Ansprüche 10 bis 12, **dadurch gekennzeichnet, dass** die Hülse (1) am freien Ende des verjüngten Endbereiches in Längsrichtung gerichtete, zum freien Ende offen ausmündende Schlitze (15) auf den Umfang verteilt aufweist, vorzugsweise im Bereich der materialverdünnten Zonen (14).

14. Anordnung nach einem der Ansprüche 10 bis 13, **dadurch gekennzeichnet, dass** die Hülse (1) von einem Flanschrand (2) ausgehend einen ersten Längsbereich (16) aufweist, der sich zum anderen Ende gering konisch verjüngt, vorzugsweise in einem zur Entformung ausreichenden Winkel 3° bis 5°, wobei dieser Längsbereich vorzugsweise außenseitig vorragende Längsrippen (17) aufweist, und dass die Hülse (1) im an den ersten Längsbereich (16) anschließenden zweiten Längsbereich (18) bis zum Ende hin trichterförmig verjüngt ist, vorzugsweise in einem Winkel von etwa 20° bis 40° gegenüber der Mittellängsachse der Hülse (1).

15. Anordnung nach Anspruch 14,
**dadurch gekennzeichnet, dass** die Wandstärke der Hülse (1) im ersten Längsbereich (16) größer als im zweiten Längsbereich (18) ist.

16. Anordnung nach einem der Ansprüche 1 bis 15, **dadurch gekennzeichnet, dass** die Hülse (1) länger ist als die Wandstärke der die Durchgangslochung aufweisende Brandschutzwand.

17. Anordnung nach einem der Ansprüche 1 bis 16, **dadurch gekennzeichnet, dass** die Hülsenlänge maximal 45 mm beträgt.

## Claims

1. A system for exhaust gas sealing of a long part, for instance of a cable or of a pipe, through a wall, in particular a fire protection wall including a through-hole, through which a long part can be guided and which has a cross-section preferably slightly larger than the cross-section or diameter of the long part, a sleeve (1) made of an intumescent material being provided, the outer dimension or the outer diameter of which being adapted to the through-hole and which can be or is inserted into the through-hole, the long part being adapted to be guided or being guided through the sleeve, **characterized by that** the sleeve (1) is made of an injection-moldable plastic material with intumescence additives and that the sleeve (1) includes a separable cladding region (8), so that the sleeve (1) with the separable cladding region (8) can be inserted in a matching manner into a through-hole with a first diameter, and the sleeve (1) without the separable cladding region (8) can be inserted in a matching manner into a through-hole with a second diameter being smaller than the first diameter.

2. The system according to claim 1, **characterized by that** the first diameter of the through-hole is 35 mm and the second diameter is 32 mm.

3. The system according to one of claims 1 or 2, **characterized by that** the separable cladding region (8) extends helically over the entire length of the sleeve (1).

4. The system according to claim 1 or 2, **characterized by that** the separable cladding region (8) extends in a straight line over the entire length of the sleeve (1), preferably in parallel to the longitudinal central axis of the sleeve (1).

5. The system according to one of claims 1 to 4, **characterized by that** the separable cladding region (8) is connected via predetermined breaking points (9) with the cladding of the sleeve (1).

6. The system according to one of claims 1 to 5, **characterized by that** the sleeve (1) includes a longitudinal slot (10) extending over the entire length thereof, and that the separable cladding region (8) is disposed beside the longitudinal slot (10).

7. The system according to one of claims 1 to 6, **characterized by that** the sleeve (1) includes at one end a flanged edge (2), the separable cladding region (8) extending up to over the flanged edge (2), so that together with the cladding region (8), a partial section (11) of the flanged edge (2) can also be separated.

8. The system according to one of claims 1 to 7, **characterized by that** at the separable cladding region (8) is formed a handle (13).

9. The system according to one of claims 1 to 8, **characterized by that** the separable cladding region (8) projects beyond one end of the sleeve (1), preferably beyond the end formed without flanged edge (2), and that the projecting end section forms the handle (13).

10. The system according to one of claims 1 to 9, **characterized by that** the sleeve (1) is tapered in a funnel-like manner toward the end section over its complete length or at least in an end section turned away from the flanged edge (2), so that the clear width of the sleeve (1) in the region provided with the flanged edge (2) is larger than in the other end section.

11. The system according to claim 10, **characterized by that** at least the funnel-shaped region is made of an elastically deformable material.

12. The system according to one of claims 10 or 11, **characterized by that** the funnel-shaped region includes zones (14) of thinner material distributed over its periphery and directed in the longitudinal direction of the sleeve (1).

13. The system according to one of claims 10 to 12, **characterized by that** the sleeve (1) includes, at the free end of the tapered end section, slots (15) distributed over the periphery, preferably in the region of the zones (14) of thinner material, said slots being directed in the longitudinal direction and being open toward the free end.

14. The system according to one of claims 10 to 13, **characterized by that** the sleeve (1), starting from a flanged edge (2), includes a first longitudinal section (16), which is slightly conically tapered toward the other end, preferably at an angle of 3° to 5° being sufficient for removal from the mold, this longitudinal section preferably including longitudinal ribs (17) projecting on the outside, and that the sleeve (1) is tapered in a funnel-like manner toward the end at the second longitudinal section (18) following the first longitudinal section (16), preferably at an angle of about 20° to 40° relative to the longitudinal central axis of the sleeve (1).

15. The system according to claim 14, **characterized by that** the wall thickness of the sleeve (1) in the first longitudinal section (16) is larger than in the second longitudinal section (18).

16. The system according to one of claims 1 to 15, **characterized by that** the sleeve (1) is longer than the wall thickness of the fire protection wall including the through-hole.

17. The system according to one of claims 1 to 16, **characterized by that** the sleeve length is maximum 45 mm.

## Revendications

1. Système destiné au passage étanche aux gaz de combustion d'un élément longitudinal, par exemple d'un câble ou d'un tuyau, à travers un mur, en particulier un mur coupe-feu, qui comporte un trou de passage, à travers lequel un élément longitudinal peut être guidé et qui a une section transversale de préférence légèrement supérieure à la section transversale ou au diamètre de l'élément longitudinal, un manchon (1) en un matériau intumescent étant prévu, la dimension extérieure ou le diamètre extérieur duquel étant adapté à celui du trou de passage et qui peut être ou est inséré dans le trou de passage, l'élément longitudinal étant adapté à être guidé ou étant guidé à travers le manchon, **caractérisé en ce que** le manchon (1) est en un matériau plastique apte à être moulé par injection avec des additifs d'intumescence et que le manchon (1) comporte une zone d'enveloppe (8) séparable, de façon que le manchon (1) avec la zone d'enveloppe (8) séparable puisse être inséré convenablement dans un trou de passage avec un premier diamètre, et le manchon (1) sans la zone d'enveloppe (8) séparable peut être inséré convenablement dans un trou de passage avec un deuxième diamètre inférieur au premier diamètre.

2. Système selon la revendication 1, **caractérisé en ce que** le premier diamètre du trou de passage est de 35 mm et le deuxième diamètre est de 32 mm.

3. Système selon une des revendications 1 ou 2, **caractérisé en ce que** la zone d'enveloppe (8) séparable s'étend en hélice sur la longueur complète du manchon (1).

4. Système selon la revendication 1 ou 2, **caractérisé en ce que** la zone d'enveloppe (8) séparable s'étend en ligne droite sur la longueur complète du manchon (1), de préférence en parallèle à l'axe central longitudinal du manchon (1).

5. Système selon une des revendications 1 à 4, **caractérisé en ce que** la zone d'enveloppe (8) séparable est liée par l'intermédiaire d'amorces de rupture (9) avec l'enveloppe du manchon (1).

6. Système selon une des revendications 1 à 5, **caractérisé en ce que** le manchon (1) comporte une fente longitudinale (10) s'étendant sur sa longueur complète, et que la zone d'enveloppe (8) séparable est disposée à côté de la fente longitudinale (10).

7. Système selon une des revendications 1 à 6, **caractérisé en ce que** le manchon (1) comporte à une extrémité un bord de bride (2), la zone d'enveloppe (8) séparable s'étendant sur le bord de bride (2), de façon qu'ensemble avec la zone d'enveloppe (8), une section partielle (11) du bord de bride (2) puisse aussi être séparée.

8. Système selon une des revendications 1 à 7, **caractérisé en ce qu**'à la zone d'enveloppe (8) séparable est réalisée une poignée (13).

9. Système selon une des revendications 1 à 8, **caractérisé en ce que** la zone d'enveloppe (8) séparable fait saillie par rapport à une extrémité du manchon (1), de préférence par rapport à l'extrémité réalisée sans bord de bride (2), et que la zone d'extrémité faisant saillie forme la poignée (13).

10. Système selon une des revendications 1 à 9, **caractérisé en ce que** le manchon (1) se rétrécit en forme d'entonnoir vers la section d'extrémité sur sa longueur complète ou au moins dans une section d'extrémité opposée au bord de bride (2), de façon que le diamètre intérieur du manchon (1) dans la région pourvue du bord de bride (2) soit supérieur à celui dans l'autre section d'extrémité.

11. Système selon la revendication 10, **caractérisé en ce qu**'au moins la région en forme d'entonnoir est en un matériau élastiquement déformable.

12. Système selon une des revendications 10 ou 11, **caractérisé en ce que** la région en forme d'entonnoir comporte des zones (14) en matériau plus mince distribuées sur sa périphérie et dirigées en direction longitudinale du manchon (1).

13. Système selon une des revendications 10 à 12, **caractérisé en ce que** le manchon (1) comporte, à l'extrémité libre de la section d'extrémité rétrécie, des fentes (15) distribuées sur la périphérie, lesdites fentes étant dirigées en direction longitudinale et étant ouvertes vers l'extrémité libre, de préférence dans le domaine des zones (14) en matériau plus mince.

14. Système selon une des revendications 10 à 13, **caractérisé en ce que** le manchon (1), à partir d'un bord de bride (2), comporte une première section longitudinale (16), qui est légèrement conique vers l'autre extrémité, de préférence selon un angle de 3° à 5° suffisant pour démoulage, cette section longitudinale de préférence comportant des nervures longitudinales (17) faisant saillie sur le côté extérieur, et que le manchon (1) se rétrécit en forme d'entonnoir vers l'extrémité à la deuxième section longitudinale (18) suivant la première section longitudinale (16), de préférence selon un angle d'environ 20° à 40° par rapport à l'axe central longitudinal du manchon (1).

15. Système selon la revendication 14, **caractérisé en ce que** l'épaisseur de paroi du manchon (1) dans la première section longitudinale (16) est supérieure à celle dans la deuxième section longitudinale (18).

16. Système selon une des revendications 1 à 15, **caractérisé en ce que** le manchon (1) est plus long que l'épaisseur de paroi du mur coupe-feu comportant le trou de passage.

17. Système selon une des revendications 1 à 16, **caractérisé en ce que** la longueur du manchon est de 45 mm max.
